# EUROPÄISCHE PATENTSCHRIFT

(11) **EP 2 611 672 B1**
(45) Veröffentlichungstag und Bekanntmachung des Hinweises auf die Patenterteilung: **10.12.2014**
(21) Anmeldenummer: 11764466.6
(22) Anmeldetag: 02.09.2011
(51) Int. Cl.: B62D 1/16

(54) **ANORDNUNG ZUR BEFESTIGUNG EINER LENKSÄULE AN EINEM KAROSSERIEFESTEN BAUTEIL EINES FAHRZEUGS**
ARRANGEMENT FOR SECURING A STEERING COLUMN TO A BODY-MOUNTED COMPONENT OF A VEHICLE
SYSTÈME DE FIXATION D'UNE COLONNE DE DIRECTION SUR UNE PIÈCE SOLIDAIRE DE LA CARROSSERIE D'UN VÉHICULE

(30) Priorität: 03.09.2010 DE 102010036296
(43) Veröffentlichungstag der Anmeldung: 10.07.2013
(73) Patentinhaber: Volkswagen Aktiengesellschaft, 38440 Wolfsburg (DE)
(72) Erfinder: OTTE, Roland, 38557 Osloss (DE); WOLTER, Christian, 38531 Rötgesbüttel (DE)
(86) Internationale Anmeldenummer: PCT/EP2011/004422
(87) Internationale Veröffentlichungsnummer: WO 2012/028322

(56) Entgegenhaltungen:
- EP-A1- 0 444 996
- EP-A1- 0 655 380

## Beschreibung

Die Erfindung betrifft eine Anordnung zur Befestigung einer Lenksäule an einem karosseriefesten Bauteil eines Fahrzeugs, insbesondere Kraftfahrzeugs, nach dem Oberbegriff des Patentanspruchs 1 der Erfindung.

Aus der KR 20040102788 A ist eine Anordnung zur Befestigung einer Lenksäule an einem karosseriefesten Bauteil eines Fahrzeugs bekannt, bei der eine Lenksäule mit zwei axial hintereinander angeordneten Haltewinkeln ausgestattet ist. Einer der beiden Haltewinkel weist ein stiftartiges gebogenes Halteelement auf, welches während der Montage der Lenksäule in eine korrespondierende Bohrung eines karosseriefesten Bauteils, eine Schwenkachse ausbildend, eingefädelt wird. Nachfolgend wird die Lenksäule um besagte Schwenkachse gegen das karosseriefeste Bauteil verschwenkt und werden die beiden Haltewinkel mit dem karosseriefesten Bauteil verschraubt. Die EP 0 831 009 A2 beschreibt des Weiteren eine Anordnung zur Befestigung einer Lenksäule an einem karosseriefesten Bauteil, mit einem an der Lenksäule befestigten Lenksäulenanschlussrahmen, der seinerseits vormontierte Schraubverbindungen aufweist, welche ihrerseits jeweils aus einem Schraubenbolzen, einem Schraubenkopf, einer Schraubenmutter und einer verformbaren Distanzhülse bestehen. Während der Montage der Lenksäule werden die vorbereiteten Schraubverbindungen des Lenksäulenanschlussrahmens in vorbereitete Durchbrüche des karosseriefesten Bauteils, vorliegend einer sogenannte Anschlusskonsole, eingefädelt. Die Durchbrüche sind ihrerseits tropfenförmig mit einem Abschnitt, der von der Schraubenmutter durchsetzbar ist und mit einem Abschnitt, dessen Innendurchmesser gleich oder geringfügig größer dem Außendurchmesser des Schraubenbolzens ist, ausgebildet. Abschließend werden besagte Schraubverbindungen im Bereich des geminderten Innendurchmessers fest gezogen. Eine hierzu ähnliche Lösung ist ferner durch die JP 2003127872 A offenbart. Aus der DE 602 26 087 T2 ist überdies eine Anordnung zur Befestigung einer Lenksäule an einem karosseriefesten Bauteil eines Fahrzeugs bekannt, bei der eine sogenannte mit einem fahrzeugfesten Bauteil fest verbundene Säulenmontageklammer vermittels Schraubbolzen mit einem Säulenhalter einer Lenksäule fest verbindbar ist. Eine Vormontage der Lenksäule an der Säulenmontageklammer ist mittels am

Säulenhalter einstückig ausgebildeter Halteklauen gestattet, die auf die Säulenmontageklammer aufgeschoben werden. Weiterhin ist aus der DE 102 53 959 B4 eine Anordnung der gattungsgemäßen Art bekannt, welche an der Lenksäule und an einem Querträger Haltemittel vorsieht, die in einem Vormontagezustand derart zusammenwirken, dass die Lenksäule freihängend an dem Querträger gehalten ist. Im Wesentlichen ist vorgesehen, dass die Lenksäule während einer Vormontage an wenigstens einem hinteren Haltemittel des Querträgers einhakbar ist und durch eine Schwenkbewegung und eine anschließende Verschiebung an wenigstens einem vorderen Haltemittel des Querträgers einhängbar ist. An besagte Vormontage schließt sich eine Endmontage mit Zentrierung und Verschraubung der Lenksäule mit dem Querträger an. Schließlich sind seit geraumer Zeit Lenksäulen bekannt, welche auch als Sicherheitslenksäulen bezeichnet, im Falle eines Crashereignisses, insbesondere Frontalcrashes, mittels eines Deformationselementes energieverzehrend axial verschiebbar bzw. teleskopierbar ausgebildet sind, um eine nachteilige Intrusion der Lenksäule in die Fahrgastzelle zu vermeiden (z. B. DE 36 16 246 A1). Gemäß besagter DE 36 16 246 A1 ist eine Lenksäulenbefestigung als Deformationselement ausgebildet, indem eine dünne metallische Platte desselben schlitzartige Verformungsabschnitte aufweist, welche von sogenannten Verdrängungsbolzen durchsetzt sind, die ihrerseits an einer karosseriefesten Lenkkonsole befestigt sind.

Aus der EP 0 655 380 A1 ist zudem eine Anordnung zur Befestigung einer Lenksäule bekannt, die ein Haltemittel für die Lenksäule umfasst, welches zusätzlich eine Zentrierung bei der Montage der Lenksäule realisiert. Die Halterung und Zentrierung der Lenksäule erfolgt über eine formschlüssige Verbindung, welche durch ein elastisches Element unterstützt wird.

Aufgabe der Erfindung ist es, eine im Hinblick auf den Stand der Technik alternative Anordnung zur Befestigung einer Lenksäule an einem karosseriefesten Bauteil eines Fahrzeugs, insbesondere Kraftfahrzeugs, zu schaffen, welche einfach und kostengünstig ist und mit welcher der Montageaufwand verringert ist.

Ausgehend von einer Anordnung zur Befestigung einer Lenksäule an einem karosseriefesten Bauteil eines Fahrzeugs, insbesondere Kraftfahrzeugs, wobei die Lenksäule zumindest während einer axialen Belastung zur Fahrzeugfront hin axial verschiebbar ist, mit einem am karosseriefesten Bauteil angeordneten Lenksäulenhalter und einem demselben zugeordneten und an der Lenksäule angeordneten Formschlusselement, welches seinerseits mit dem Lenksäulenhalter derart verbunden oder verbindbar ist, dass die Lenksäule in einem Vormontagezustand am karosseriefesten Bauteil aufgehängt ist, wird die gestellte Aufgabe dadurch gelöst, dass das Formschlusselement zumindest ein Halte- und Zentriermittel aufweist, welches mit einem Haltemittel des Lenksäulenhalters derart zusammenwirkt, dass die Lenksäule bereits im besagten Vormontagezustand zum karosseriefesten Bauteil zentriert an demselben aufgehängt ist und das Haltemittel des Lenksäulenhalters durch ein einfach und kostengünstig herstellbares Langloch in einer Führungsplatte des Lenksäulenhalters gebildet ist, welches sich überwiegend in Längsrichtung des Fahrzeugs erstreckt.

Durch diese Maßnahme sind herkömmliche zusätzliche Zentrierungsmittel, wie sie der Stand der Technik vorsieht, vorteilhaft vermieden. Sowohl Halterung als auch Zentrierung der Lenksäule am und zum Lenksäulenhalter sind in einem einzigen Bauteil, nämlich besagtem Halte- und Zentriermittel vereint.

Die Unteransprüche beschreiben bevorzugte Weiterbildungen oder Ausgestaltungen der Erfindung.

Danach kann das Langloch fahrzeugfrontseitig einen ersten Lochabschnitt aufweisen, an den sich fahrzeugheckseitig ein im Verhältnis zum ersten Lochabschnitt breiter ausgebildeter zweiter Lochabschnitt anschließt. Eine derartige Ausbildung eröffnet die Möglichkeit einer vorteilhaften Weiterbildung der erfindungsgemäßen Anordnung respektive deren Formschlussmittels. So kann das zumindest eine Halte- und Zentriermittel des Formschlusselementes vorteilhaft zum einen durch zumindest ein Verrastungselement gebildet sein, welches im verrasteten Zustand das Langloch oder das Langloch im Bereich des ersten Lochabschnittes desselben durchdringt sowie die Führungsplatte hintergreift und zum anderen durch konvex ausgebildete Oberflächenkonturen des Formschlusselementes gebildet sein, die sich sowohl im Vormontage- als auch im Endmontagezustand der Lenksäule am Lenksäulenhalter an Seitenlängswänden des Langloches oder des ersten Lochabschnittes desselben abstützen. Hierdurch ist während der Vormontage eine einfache und schnell zu bewerkstelligende Halterung der Lenksäule am Lenksäulenhalter mit einer gleichzeitigen Zentrierung derselben zueinander gestattet. Wie die Erfindung noch vorsieht, können die konvex ausgebildeten Oberflächenkonturen des Formschlusselementes sich derart an den Seitenlängswänden des Langloches oder des ersten Lochabschnittes desselben abstützen, dass eine Relativbewegung überwiegend in Fahrzeuglängsrichtung zwischen dem Lenksäulenhalter und dem Formschlusselement entlang des besagten Langloches gestattet ist. Gesetzt den Fall, es ist ein Crashereignis, einhergehend mit einer axialen Belastung auf die Lenksäule durch Auftreffen des Fahrzeugführers auf das Lenkrad zu verzeichnen und an sich bekannte, Crashenergie schonend abbauende Maßnahmen, wie Versagen von an sich bekannten Deformationselementen, beispielsweise an sich bekannten mechanischen Befestigungselementen, sowie an sich bekannte Energieabsorptionselemente treten in Kraft, so ist besonders vorteilhaft ein definiertes axiales Verschieben, beispielsweise Teleskopierverhalten der Lenksäule vom Fahrzeugführer weg gestattet. Vermittels besagten Langloches und der konvex ausgebildeten Oberflächenkonturen des Formschlusselementes werden die Lenksäule und damit das Lenkrad sowie ein an sich bekannter Airbag in ihrer optimalen und die Funktion der Energieabsorptionselemente gewährleistenden Position gehalten. Ein seitliches Ausbrechen derselben ist vermieden. Durch diese Maßnahme sind nunmehr Halte-, Zentrier- und Crashführungsfunktion vorteilhaft in der Wirkkombination aus Langloch und Formschlusselement vereint. Wie die Erfindung noch vorsieht, kann das Formschlusselement durch einen fahrzeugfrontseitigen Abschnitt und durch einen fahrzeugheckseitigen Abschnitt gebildet sein, wobei der fahrzeugfrontseitige Abschnitt das Halte- und Zentriermittel aufweisen kann, welches sowohl im Vormontage- als auch im Endmontagezustand der Lenksäule am Lenksäulenhalter im Bereich des ersten Lochabschnittes des Langloches angeordnet ist, und wobei der fahrzeugheckseitige Abschnitt von den Seiten des Formschlusselementes derart weit seitlich abgestellte Stützmittel, die ihrerseits zumindest im Endmontagezustand der Lenksäule am Lenksäulenhalter in einer Ebene oberhalb der Führungsplatte des Lenksäulenhalters und sowohl im Vormontage- als auch im Endmontagezustand der Lenksäule am Lenksäulenhalter im Bereich des zweiten Lochabschnittes des Langloches angeordnet sind, aufweisen kann, dass die Stützmittel infolge einer Relativbewegung zwischen dem Lenksäulenhalter und dem Formschlusselement entlang des Langloches in den Bereich des ersten Lochabschnittes des Langloches überführbar sind und denselben seitlich überragen. Aus dieser Maßnahme resultiert der Vorteil, dass im Falle besagten Crashereignisses die Lenksäule, wie oben bereits angedeutet, aus ihren Befestigungspunkten kontrolliert ausgebrochen wird und dieselbe gegen Herunterfallen auf den Fahrzeugführer geschützt ist. Die sozusagen flügelartig ausgebildeten Stützmittel des Formschlusselementes verhindern ein Herunterfallen der Lenksäule, da sich die besagten Stützmittel an der Führungsplatte des Lenksäulenhalters abstützen. Demgemäß sind weiter vorteilhaft nach Art eines Multifunktionselementes Halte-, Zentrier- und Crashführungsfunktion sowie Herunterfallsicherung in der Wirkkombination aus Langloch und Formschlusselement vereint. Das Formschlusselement kann sowohl ein- als auch mehrteilig ausgebildet sein. So kann bei Wahl eines einteiligen Formschlusselementes dasselbe beispielweise aus einem geeigneten Kunststoff, einem Verbundwerkstoff oder einem Metall bestehen. Bei Wahl eines mehrteiligen Formschlusselementes kann dasselbe durch einen den fahrzeugfrontseitigen Abschnitt des Formschlusselementes nachbildenden vorderen Formschlusselemente-Teil und durch einen den fahrzeugheckseitigen Abschnitt des Formschlusselementes nachbildenden hinteren Formschlusselemente-Teil gebildet sein, wobei vorderer und hinterer Formschlusselemente-Teil untereinander form-, kraft- und/oder stoffschlüssig verbunden sein und aus einem gleichen oder unterschiedlichen Werkstoff bestehen können. Dabei bietet es sich beispielsweise an, den den fahrzeugheckseitigen Abschnitt des Formschlusselementes nachbildenden hinteren Formschlusselemente-Teil aus einem crashstabilen Werkstoff, wie beispielsweise aus Metall und den den fahrzeugfrontseitigen Abschnitt des Formschlusselementes nachbildenden vorderen Formschlusselemente-Teil beispielsweise aus nicht so hoch belastbaren Werkstoff, wie einem Kunststoff, auszubilden, da dieser überwiegend der komfortablen Vormontage der Lenksäule am Lenksäulenhalter und der Zentrierung sowie Crashführung dient. Als praxisnahe Ausgestaltung der Erfindung bietet sich als karosseriefestes Bauteil ein an sich bekannter Fahrzeugquerträger, wie beispielsweise ein Querträger zur Halterung einer an sich bekannten Armaturentafel an

Die Erfindung betrifft auch ein Fahrzeug, insbesondere Kraftfahrzeug, mit einer Anordnung der vorstehend beschriebenen Art.

Die Erfindung wird nachstehend anhand eines in den Zeichnungen schematisch dargestellten Ausführungsbeispieles näher erläutert. Es zeigen:
- Fig. 1: die erfindungsgemäße Anordnung zur Befestigung einer Lenksäule an einem karosseriefesten Bauteil eines Fahrzeugs in einer perspektivischen Ansicht,
- Fig. 2: die Einzelheit "X" nach Fig. 1 gemäß einer ersten möglichen Ausführungsvariante,
- Fig. 3: die Einzelheit "X" nach Fig. 1 gemäß einer weiteren möglichen Ausführungsvariante,
- Fig. 4: die Anordnung nach Fig. 1 in einem Zustand während der Montage derselben,
- Fig. 5: die Anordnung nach Fig. 4 im endmontierten Zustand,
- Fig. 6: die Ansicht "A" nach Fig. 5;
- Fig. 7: den Schnitt "I-I" nach Fig. 6,
- Fig. 8: die Anordnung nach Fig. 1 in einem Zustand unmittelbar nach einem Crashereignis, bei dem die Lenksäule axial nach Fahrzeug-vorn verschoben wurde,
- Fig. 9: die Ansicht "B" nach Fig. 8,
- Fig. 10: den Schnitt "II-II" nach Fig. 9, und
- Fig. 11: den Schnitt "III-III" / "IV-IV" nach Fig. 7 bzw. 10.

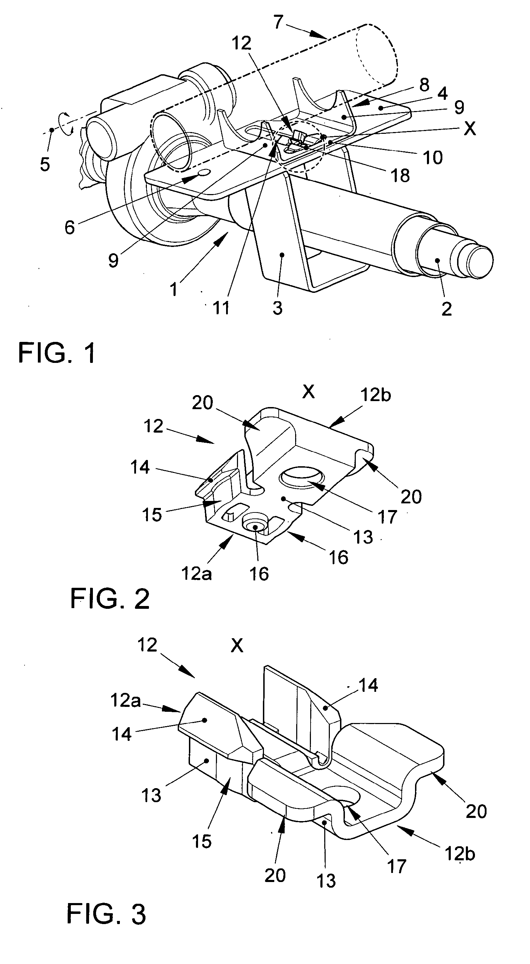

Fig. 1 zeigt eine nach dem Stand der Technik im Crashfall bekanntermaßen axial verschiebbare Lenksäule 1 eines Fahrzeugs, insbesondere Kraftfahrzeugs, welche eine an sich bekannte Lenkwelle 2 und einen Befestigungsbügel 3 mit einer plattenförmigen Traverse 4 aufweist. Die Lenksäule 1 ist vermittels eines hier äußerst schematisch dargestellten Schwenklagers 5 schwenkbeweglich an der nicht näher dargestellten Fahrzeugkarosserie gelagert: Auf der Traverse 4 sind in Fahrzeugquerrichtung (Y-Richtung) gesehen beidseitig der Lenkwelle 2 Befestigungspunkte 6 in Form von Durchgangsbohrungen vorgesehen, welche zur Festlegung der Lenksäule 1 an einem karosseriefesten Bauteil 7, vorliegend einem Fahrzeugquerträger, von hier nicht näher dargestellten, jedoch an sich bekannten mechanischen Befestigungselementen, insbesondere Befestigungsschrauben, durchsetzt sind.

Am karosseriefesten Bauteil 7 ist ein Lenksäulenhalter 8 fest angeordnet, an welchem die Lenksäule 1 in einem Vormontagezustand aufgehängt ist. Insoweit verfügt der vorliegend im Querschnitt U-förmig ausgebildete Lenksäulenhalter 8 über zwei beabstandet zueinander angeordnete und an die Außenkontur des karosseriefesten Bauteils 7 angepasste sowie an dem karösseriefesten Bauteil 7 stoff-, form und/oder kraftschlüssig befestigte Stege 9, die ihrerseits vermittels einer Führungsplatte 10 untereinander fest verbunden sind. Bevorzugt ist der Lenksäulenhalter 8 einstückig ausgebildet.

Am Lenksäulenhalter 8 respektive an dessen Führungsplatte 10 ist ein Haltemittel in Form eines sich überwiegend in Längsrichtung des Fahrzeugs erstreckenden Langloches 11 vorgesehen. Dem besagten Langloch 11 ist ein Formschlusselement 12 zugeordnet, welches an der Traverse 4 befestigt ist und ein Halte- und Zentriermittel aufweist (vgl. insbes. Fig. 2 und 3).

Das Halte- und Zentriermittel des Formschlusselementes 12 ist zum einen durch an einem Grundkörper 13 des Formschlusselementes 12 einstückig ausgebildete Verrastungselemente 14 und zum anderen durch konvex ausgebildete Oberflächenkonturen 15 am Grundkörper 13 des Formschlusselementes 12 gebildet. Des Weiteren verfügt das Formschlusselement 12 über eines oder mehre Mittel zur Befestigung desselben auf der Traverse 4 der Lenksäule 1.

Vorliegend sind am Formschlusselement 12 ein Zentrierstift 16 und eine Durchgangsbohrung 17 vorgesehen. Zur Befestigung des Formschlusselementes 12 auf der Traverse 4 wird das Formschlusselement 12 mit seinem Zentrierstift 16 in einer hier nicht näher dargestellten Aufnahmeöffnung der Traverse 4 fixiert und wird die Durchgangsbohrung 17 in Flucht mit einer ebenfalls nicht näher dargestellten zur Durchgangsbohrung 17 korrespondierenden Durchgangsbohrung der Traverse 4 gebracht. Im Anschluss daran wird das Formschlusselement 12 mittels eines an sich bekannten mechanischen Befestigungselementes, wie beispielsweise einer Befestigungsschraube 18, eines Clipselementes o.ä., an der Traverse 4 festgelegt.

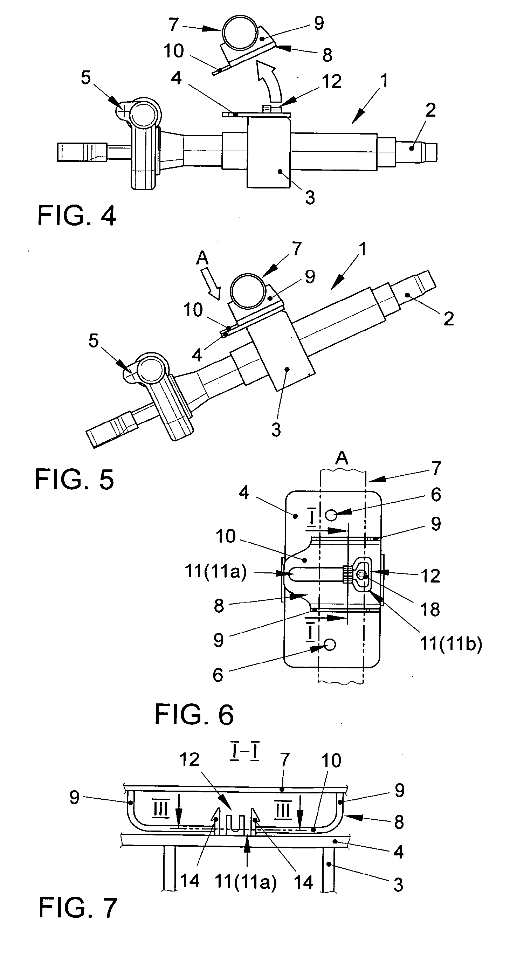

Nachfolgend wird die Erfindung weiter unter Zuhilfenahme der Figuren 4 bis 7 und bzgl. ihrer Funktion im Zusammenhang mit der Montage der Lenksäule 1 am karosseriefesten Bauteil 7 beschrieben.

Wie bereits oben ausgeführt, ist die Lenksäule 1 in Vorbereitung der Montage fahrzeugfrontseitig vermittels des Schwenklagers 5 an der nicht näher dargestellten Fahrzeugkarosserie in einer vertikalen Ebene schwenkbar angelenkt. Während der Montage wird der Werker die mit dem Formschlusselement 12 bestückte Lenksäule 1 gegen die Führungsplatte 10 des Lenksäulenhalters 8 schwenken. Zum Ende besagter Schwenkbewegung durchdringen die Verrastungselemente 14 das Langloch 11 und hintergreifen die Führungsplatte 10 (vgl. insbes. Fig. 6 und 7).

Während des Einrastens der Verrastungselemente 14 im Langloch 11 dringen auch die konvex ausgebildeten Oberflächenkonturen 15 in das Langloch 11 ein und zentrieren die Lenksäule 1 zum karosseriefesten Bauteil 7 respektive zum Lenksäülenhalter 8. Hierbei stützen sich besagte konvex ausgebildeten Oberflächenkonturen 15 an den Seitenlängswänden 19 des Langloches 11 ab.

Der Werker kann nunmehr die vormontierte Lenksäule 1 freigeben und sich im Rahmen der Endmontage der Befestigung derselben am karosseriefesten Bauteil 7 widmen, indem er die bereits oben erwähnten nicht näher dargestellten, jedoch an sich bekannten mechanischen Befestigungselemente, insbesondere Befestigungsschrauben aufnimmt und vermittels derselben im Bereich der Befestigungspunkte 6 die Traverse 4 der Lenksäule 1 mit dem karosseriefesten Bauteil 7 in Form des Fahrzeugquerträgers fest verbindet.

Wie den Figuren 1, 6, 9 und 11 weiter zu entnehmen ist, weist das Langloch 11 fahrzeugfrontseitig einen ersten Lochabschnitt 11a auf, an den sich fahrzeugheckseitig ein im Verhältnis zum ersten Lochabschnitt 11a breiter ausgebildeter zweiter Lochabschnitt 11 b anschließt.

Dieses besonders ausgebildete Langloch 11 trägt der weiteren besonderen Ausbildung des Formschlusselementes 12 Rechnung, welches seinerseits durch einen fahrzeugfrontseitigen Abschnitt 12a und durch einen fahrzeugheckseitigen Abschnitt 12b gebildet ist.

Der fahrzeugfrontseitige Abschnitt 12a des Formschlusselementes 12 weist dabei besagte Halte- und Zentriermittel in Form der Verrastungselemente 14 und der konvex ausgebildeten Oberflächenkonturen 15 auf, wogegen der fahrzeugheckseitige Abschnitt 12b seitlich abgestellte, sozusagen flügelartig ausgebildete Stützmittel 20, die ihrerseits in einer Ebene oberhalb der Führungsplatte 10 des Lenksäulenhalters 8 angeordnet sind, aufweist (vgl. insbes. Fig. 2, 3, 6 und 11).

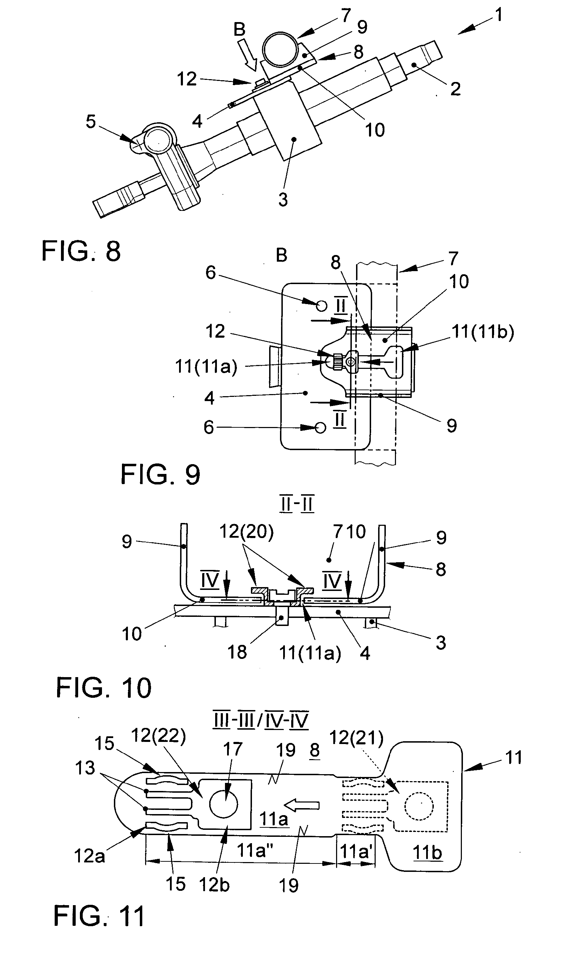

Besagte Halte- und Zentriermittel sind sowohl im Vormontagezustand als auch im Endmontagezustand der Lenksäule 1 im Bereich des ersten Lochabschnittes 11a des Langloches 11 angeordnet. Die besagten Stützmittel 20 sind ihrerseits sowohl im Vormontagezustand als auch im Endmontagezustand der Lenksäule 1 im Bereich des zweiten Lochabschnittes 11 b des Langloches 11 angeordnet und vom zweiten Lochabschnitt 11 b sozusagen aufgenommen (vgl. insbes. Fig. 6). Der Hintergrund dieser besonderen. Ausgestaltung wird nachfolgend anhand der Fig. 8 bis 11 näher beschrieben.

Gesetzt den Fall, es sind ein Crashereignis, einhergehend mit einer axialen Belastung auf die Lenksäule 1 durch Auftreffen eines Fahrzeugführers auf das Lenkrad, sowie an sich bekannte, den Erfindungsgegenstand nicht betreffende, Crashenergie schonend abbauende Maßnahmen, wie Versagen der in den Befestigungspunkten 6 angeordneten Befestigungsschrauben und gegebenenfalls in Kraft treten von an sich bekannten Energieabsorptionselementen zu verzeichnen, so ist ein definiertes axiales Verschieben, beispielsweise Teleskopierverhalten der Lenksäule 1 vom Fahrzeugführer weg, d. h., von Fahrzeug-hinten nach Fahrzeug-von (gemäß Fig. 9 und 11 von rechts nach links) gestattet. Vermittels besagten Langloches 11 und der konvex ausgebildeten Oberflächenkonturen 15 des Formschlusselementes 12 werden die Lenksäule 1 und damit das Lenkrad sowie ein an sich bekannter Airbag in ihrer optimalen und die Funktion der Energieabsorptionselemente gewährleistenden Position gehalten. Ein seitliches Ausbrechen derselben ist vermieden.

Während der crashbedingten axialen Verschiebung der Lenksäule 1 wird gemäß Fig. 11 das Formschlusselement 12 mit seinen konvex ausgebildeten Oberflächenkonturen 15 innerhalb des ersten Lochabschnittes 11 a des Langloches 11 von einer Ausgangstellung 21 (gestrichelt gezeichnet) in eine Endstellung 22 überführt. Gleichzeitig werden die am fahrzeugheckseitigen Abschnitt 12b des Formschlusselementes 12 angeordneten flügelartigen Stützmittel 20 entlang des Langloches 11 vom zweiten Lochabschnitt 11 b in den Bereich des ersten Lochabschnittes 11a überführt. Zweckmäßigerweise sind die besagten Stützmittel 20 nunmehr derart weit seitlich abgestellt, dass sie den ersten Lochabschnitt 11a seitlich überragen.

Versagen die in den Befestigungspunkten 6 angeordneten Befestigungsschrauben und löst sich demgemäß die Lenksäule 1 vom karosseriefesten Bauteil 7, ist verhindert, dass die Lenksäule 1 weiter nach unten fällt und gegebenenfalls den Fahrzeugführer verletzt. Vermittels der flügelartigen Stützmittel 20 ist die Lenksäule 1 auch weiterhin über den Lenksäulenhalter 8 am karosseriefesten Bauteil 7 aufgehängt. Durch diese Maßnahme sind Halte-, Zentrier- und Crashführungsfunktion sowie Herunterfallsicherung vorteilhaft in der Wirkkombination aus Langloch 11 und Formschlusselement 12 vereint.

Wie insbesondere der Fig. 11 zu entnehmen ist, verfügt der erste Lochabschnittes 11 a des Langloches 11 über einen reinen Zentrierabschnitt 11a', bei dem der Grundkörper 13 des Formschlusselementes 12 mit seinen konvexen Oberflächenkonturen 15 sich unmittelbar an den Seitenlängswänden 19 abstützt respektive an denselben anliegt. An besagten Zentrierabschnitt 11a' schließt sich nach Fahrzeug-vorn ein Führungsabschnitt 11a" des ersten Lochabschnittes 11 a an, der seinerseits geringfügig breiter als der Zentrierabschnitt 11a' ausgebildet ist. Durch diese Maßnahme sind im Crashfall eine ungehinderte axiale Führung des Formschlusselementes 12 im Langloch 11 und demgemäß eine ungehinderte Relativbewegung zwischen dem Lenksäulenhalter 8 und dem Formschlusselement 12 respektive der Lenksäule 1 gewährleistet.

Wie weiter den Fig. 2 und 3 zu entnehmen ist, kann das Formschlusselement 12 ein- oder mehrteilig ausgebildet sein. Einteilige Formschlusselemente 12 (Fig. 2) können aus einem Kunststoff, einem Verbundwerkstoff oder einem Metall hergestellt sein, wobei im Falle, das Formschlusselement 12 wird mit einem Herunterfallsicherung ausgebildet, ein den besonderen erhöhten Belastungen im Crashfall gerecht werdender Werkstoff zu wählen ist.

Wird demgegenüber ein mehrteiliges Formschlusselement 12 gemäß Fig. 3 favorisiert, bietet es sich zweckmäßigerweise an, dasselbe durch jeweils ein separates, den fahrzeugfrontseiten bzw. den fahrzeugheckseitigen Abschnitt 12a, 12b nachbildendes vorderes bzw. hinteres Formschlusselemente-Teil auszubilden. Diese separat hergestellten Formschlusselemente-Teile können vorteilhaft aus unterschiedlichen Werkstoffen bestehen. Beispielgebend kann der fahrzeugfrontseitige Abschnitt 12a bzw. vordere Formschlusselemente-Teil, der seinerseits im wesentlichen der Vormontage und Zentrierung sowie der Führung im Crashfall dient und relativ geringen Belastungen ausgesetzt ist, aus einem Kunststoff bestehen und nach einem an sich bekannten Spritzgießverfahren hergestellt sein. Der fahrzeugheckseitige Abschnitt 12b bzw. der hintere Formschlusselemente-Teil, der seinerseits der Herunterfallsicherung dient, könnte demgegenüber aus einem hochbelastbaren Werkstoff, wie einem Metall, beispielsweise aus einem umgeformten Metallblech oder auch aus einem Metallguss bestehen. Die Erfindung beschränkt sich jedoch nicht auf diese Werkstoffauswahl, sondern erfasst jedwede denkbare Wahl und/oder Kombination von geeigneten Werkstoffen. Die Verbindung der beiden durch die separaten Formschlusselemente-Teile nachgebildeten Abschnitte 12a, 12b untereinander kann formschlüssig, kraftschlüssig mittels an sich bekannter mechanischer Befestigungselemente und/oder stoffschlüssig durch Klebung oder Schweißung erfolgen.

### Bezugszeichenliste

- 1: Lenksäule
- 2: Lenkwelle
- 3: Befestigungsbügel
- 4: Traverse
- 5: Schwenklager
- 6: Befestigungspunkt
- 7: karosseriefestes Bauteil
- 8: Lenksäulenhalter
- 9: Steg (Lenksäulenhalter 8)
- 10: Führungsplatte (Lenksäulenhalter 8)
- 11: Langloch
- 11a: erster Lochabschnitt
- 11a': Zentrierabschnitt
- 11a": Führungsabschnitt
- 11b: zweiter Lochabschnitt
- 12: Formschlusselement
- 12a: fahrzeugfrontseitiger Abschnitt (Formschlusselement 12)
- 12b: fahrzeugheckseitiger Abschnitt (Formschlusselement 12)
- 13: Grundkörper (Formschlusselement 12)
- 14: Verrastungselement
- 15: konvexe Oberflächenkontur
- 16: Zentrierstift (Formschlusselement 12)
- 17: Durchgangsbohrung (Formschlusselement 12)
- 18: Befestigungsschraube (Formschlusselement 12)
- 19: Seitenlängswände (Langloch 11)
- 20: Stützmittel
- 21: Ausgangsstellung
- 22: Endstellung

## Patentansprüche

1. Anordnung zur Befestigung einer Lenksäule (1) an einem karosseriefesten Bauteil (7) eines Fahrzeugs, insbesondere Kraftfahrzeugs, wobei die Lenksäule (1) zumindest während einer axialen Belastung zur Fahrzeugfront hin axial verschiebbar ist, mit einem am karosseriefesten Bauteil (7) angeordneten Lenksäulenhalter (8) und einem demselben zugeordneten und an der Lenksäule (1) angeordneten Formschlusselement (12), welches seinerseits mit dem Lenksäulenhalter (8) derart verbunden oder verbindbar ist, dass die Lenksäule (1) in einem Vormontagezustand am karosseriefesten Bauteil (7) aufgehängt ist, und das Formschlusselement (12) zumindest ein Halte- und Zentriermittel aufweist, welches mit einem Haltemittel des Lenksäulenhalters (8) derart zusammenwirkt, dass die Lenksäule (1) bereits im besagten Vormontagezustand zum karosseriefesten Bauteil (7) zentriert an demselben aufgehängt ist, **dadurch gekennzeichnet, dass** das Haltemittel des Lenksäulenhalters (8) durch ein Langloch (11) in einer Führungsplatte (10) des Lenksäulenhalters (8) gebildet ist, welches sich überwiegend in Längsrichtung des Fahrzeugs erstreckt.

2. Anordnung nach Anspruch 1, **dadurch gekennzeichnet, dass** das Langloch (11) fahrzeugfrontseitig einen ersten Lochabschnitt (11a) aufweist, an den sich fahrzeugheckseitig ein im Verhältnis zum ersten Lochabschnitt (11a) breiter ausgebildeter zweiter Lochabschnitt (11 b) anschließt.

3. Anordnung nach Anspruch 1 oder 2, **dadurch gekennzeichnet, dass** das zumindest eine Halte- und Zentriermittel des Formschlusselementes (12) zum einen durch zumindest ein Verrastungselement (14) gebildet ist, welches im verrasteten Zustand das Langloch (11) oder das Langloch (11) im Bereich des ersten Lochabschnittes (11 a) desselben durchdringt sowie die Führungsplatte (10) hintergreift und zum anderen durch konvex ausgebildete Oberflächenkonturen (15) des Formschlusselementes (12) gebildet ist, die sich sowohl im Vormontage- als auch im Endmontagezustand der Lenksäule (1) am Lenksäulenhalter (8) an Seitenlängswänden (19) des Langloches (11) oder des ersten Lochabschnittes (11 a) desselben abstützen.

4. Anordnung nach Anspruch 3, **dadurch gekennzeichnet, dass** die konvex ausgebildeten Oberflächenkonturen (15) des Formschlusselementes (12) sich derart an den Seitenlängswänden (19) des Langloches (11) oder des ersten Lochabschnittes (11 a) desselben abstützen, dass eine Relativbewegung überwiegend in Fahrzeuglängsrichtung zwischen dem Lenksäulenhalter (8) und dem Formschlusselement (12) entlang des besagten Langloches (11) gestattet ist.

5. Anordnung nach einem der Ansprüche 2 bis 4, **dadurch gekennzeichnet, dass** das Formschlusselement (12) durch einen fahrzeugfrontseitigen Abschnitt (12a) und durch einen fahrzeugheckseitigen Abschnitt (12b) gebildet ist, wobei der fahrzeugfrontseitige Abschnitt (12a) das Halte- und Zentriermittel aufweist, welches sowohl im Vormontageals auch im Endmontagezustand der Lenksäule (1) am Lenksäulenhalter (8) im Bereich des ersten Lochabschnittes (11a) des Langloches (11) angeordnet ist, und der fahrzeugheckseitige Abschnitt (12b) von den Seiten des Formschlusselementes (12) derart weit seitlich abgestellte Stützmittel (20), die ihrerseits zumindest im Endmontagezustand der Lenksäule (1) am Lenksäulenhalter (8) in einer Ebene oberhalb der Führungsplatte (10) des Lenksäulenhalters (8) und sowohl im Vormontage- als auch im Endmontagezustand der Lenksäule (1) am Lenksäulenhalter (8) im Bereich des zweiten Lochabschnittes (11 b) des Langloches (11) angeordnet sind, aufweist, dass die Stützmittel (20) infolge einer Relativbewegung zwischen dem Lenksäulenhalter (8) und dem Formschlusselement (12) entlang des Langloches (11) in den Bereich des ersten Lochabschnittes (11 a) des Langloches (11) überführbar sind und denselben seitlich überragen.

6. Anordnung nach einem der Ansprüche 1 bis 5, **dadurch gekennzeichnet, dass** das Formschlusselement (12) ein- oder mehrteilig ausgebildet ist.

7. Anordnung nach Anspruch 6, **dadurch gekennzeichnet, dass** bei Wahl eines einteiligen Formschlusselementes (12) dasselbe aus einem Kunststoff, einem Verbundwerkstoff oder einem Metall besteht und bei Wahl eines mehrteiligen Formschlusselementes (12) dasselbe durch einen den fahrzeugfrontseitigen Abschnitt (12a) des Formschlusselementes (12) nachbildenden vorderen Formschlusselemente-Teil und durch einen den fahrzeugheckseitigen Abschnitt (12b) des Formschlusselementes (12) nachbildenden hinteren Formschlusselemente-Teil gebildet ist, wobei vorderer und hinterer Formschlusselemente-Teil untereinander form-, kraft- und/oder stoffschlüssig verbunden sind und aus einem gleichen oder unterschiedlichen Werkstoff bestehen.

8. Anordnung nach Anspruch 1, **dadurch gekennzeichnet, dass** das karosseriefeste Bauteil (7) durch einen Fahrzeugquerträger gebildet ist.

9. Fahrzeug, insbesondere Kraftfahrzeug, mit einer Anordnung nach einem der Ansprüche 1 bis 8.

## Claims

1. Arrangement for securing a steering column (1) to a body-mounted component (7) of a vehicle, in particular motor vehicle, wherein the steering column (1) is axially displaceable toward the vehicle front at least during an axial loading, with a steering column holder (8) arranged on the body-mounted component (7), and with a form-fitting element (12) which is assigned to said steering column holder and is arranged on the steering column (1) and, for its part, is connected or is connectable to the steering column holder (8) in such a manner that, in a preassembly state, the steering column (1) is suspended on the body-mounted component (7), and the form-fitting element (12) has at least one holding and centring means which interacts with a holding means of the steering column holder (8) in such a manner that, even in said preassembly state, the steering column (1) is suspended on the body-mounted component (7) in a centred manner with respect thereto, **characterized in that** the holding means of the steering column holder (8) is formed in a guide plate (10) of the steering column holder (8) by an elongated hole (11) which predominantly extends in the longitudinal direction of the vehicle.

2. Arrangement according to Claim 1, **characterized in that**, on the vehicle front side, the elongated hole (11) has a first hole section (11a) which is adjoined on the vehicle rear side by a second hole section (11b) which is of wider design in relation to the first hole section (11a).

3. Arrangement according to Claim 1 or 2, **characterized in that** the at least one holding and centring means of the form-fitting element (12) is formed, firstly, by at least one latching element (14) which, in the latched state, penetrates the elongated hole (11) or the elongated hole (11) in the region of the first hole section (11a) thereof and engages behind the guide plate (10), and is formed, secondly, by convexly designed surface contours (15) of the form-fitting element (12), which surface contours, both in the preassembly state and in the final assembly state of the steering column (1) on the steering column holder (8) are supported on side longitudinal walls (19) of the elongated hole (11) or of the first hole section (11a) of same.

4. Arrangement according to Claim 3, **characterized in that** the convexly formed surface contours (15) of the form-fitting element (12) are supported on the side longitudinal walls (19) of the elongated hole (11) or of the first hole section (11a) of same in such a manner that a relative movement predominantly in the longitudinal direction of the vehicle is permitted between the steering column holder (8) and the form-fitting element (12) along said elongated hole (11).

5. Arrangement according to one of Claims 2 to 4, **characterized in that** the form-fitting element (12) is formed by a vehicle-front-side section (12a) and by a vehicle-rear-side section (12b), wherein the vehicle-front-side section (12a) has the holding and centring means which, both in the preassembly state and in the final assembly state of the steering column (1) on the steering column holder (8), is arranged in the region of the first hole section (11a) of the elongated hole (11), and the vehicle-rear-side section (12b) has supporting means (20) which are deployed laterally from the sides of the form-fitting element (12) to such an extent and, for their part, at least in the final assembly state of the steering column (1) on the steering column holder (8), are arranged in a plane above the guide plate (10) of the steering column holder (8) and, both in the preassembly state and in the final assembly state of the steering column (1) on the steering column holder (8), are arranged in the region of the second hole section (11b) of the elongated hole (11), that, as a consequence of a relative movement between the steering column holder (8) and the form-fitting element (12) along the elongated hole (11), the supporting means (20) can be transferred into the region of the first hole section (11a) of the elongated hole (11) and protrude laterally over said first hole section.

6. Arrangement according to one of Claims 1 to 5, **characterized in that** the form-fitting element (12) is of single- or multi-part design.

7. Arrangement according to Claim 6, **characterized in that**, when a single-part form-fitting element (12) is selected, said form-fitting element is composed of a plastic, of a composite material or a metal, and, when a multi-part form-fitting element (12) is selected, said form-fitting element is formed by a front form-fitting-element part simulating the vehicle-front-side section (12a) of the form-fitting element (12) and by a rear form-fitting-element part simulating the vehicle-rear-side section (12b) of the form-fitting element (12), wherein front and rear form-fitting-element parts are connected to one another in a form-fitting, frictional and/or integrally bonded manner and are composed of an identical or different material.

8. Arrangement according to Claim 1, **characterized in that** the body-mounted component (7) is formed by a vehicle crossmember.

9. Vehicle, in particular motor vehicle, with an arrangement according to one of Claims 1 to 8.

## Revendications

1. Système de fixation d'une colonne de direction (1) à un composant (7) fixé à la carrosserie d'un véhicule, en particulier d'un véhicule automobile, la colonne de direction (1) pouvant être déplacée axialement vers l'avant du véhicule au moins pendant une sollicitation axiale, comprenant un support de colonne de direction (8) disposé sur le composant (7) fixé à la carrosserie et un élément d'engagement positif (12) disposé sur la colonne de direction (1) et associé au support de colonne de direction, lequel, pour sa part, est connecté ou peut être connecté au support de colonne de direction (8) de telle sorte que la colonne de direction (1), dans un état de prémontage, puisse être accrochée au composant (7) fixé à la carrosserie et l'élément d'engagement positif (12) présentant au moins un moyen de retenue et de centrage qui coopère avec un moyen de retenue du support de colonne de direction (8) de telle sorte que la colonne de direction (1), déjà dans ledit état de prémontage, soit accrochée au composant (7) fixé à la carrosserie et ce de manière centrée par rapport à celui-ci, **caractérisé en ce que** le moyen de retenue du support de colonne de direction (8) est formé par un trou oblong (11) dans une plaque de guidage (10) du support de colonne de direction (8) qui s'étend essentiellement dans la direction longitudinale du véhicule.

2. Système selon la revendication 1, **caractérisé en ce que** le trou oblong (11) présente, du côté avant du véhicule, une première portion de trou (11a) à laquelle se raccorde, du côté arrière du véhicule, une deuxième portion de trou (11b) réalisée de manière plus large que la première portion de trou (11a).

3. Système selon la revendication 1 ou 2, **caractérisé en ce que** l'au moins un moyen de retenue et de centrage de l'élément d'engagement positif (12) est formé d'une part par au moins un élément d'encliquetage (14) qui, dans l'état encliqueté, traverse le trou oblong (11) ou le trou oblong (11) dans la région de sa première portion de trou (11a) et vient en prise par l'arrière avec la plaque de guidage (10) et d'autre part par des contours de surface convexes (15) de l'élément d'engagement positif (12) qui, à la fois dans l'état de prémontage et dans l'état de montage final de la colonne de direction (1), s'appuient sur le support de colonne de direction (8) au niveau de parois longitudinales latérales (19) du trou oblong (11) ou de sa première portion de trou (11a).

4. Système selon la revendication 3, **caractérisé en ce que** les contours de surface convexes (15) de l'élément d'engagement positif (12) s'appuient sur les parois longitudinales latérales (19) du trou oblong (11) ou de sa première portion de trou (11a) de telle sorte qu'un mouvement relatif essentiellement dans la direction longitudinale du véhicule entre le support de colonne de direction (8) et l'élément d'engagement positif (12) le long dudit trou oblong (11) soit permis.

5. Système selon l'une quelconque des revendications 2 à 4, **caractérisé en ce que** l'élément d'engagement positif (12) est formé par une portion du côté avant du véhicule (12a) et par une portion du côté arrière du véhicule (12b), la portion du côté avant du véhicule (12a) présentant le moyen de retenue et de centrage, qui est disposé à la fois dans l'état de prémontage et dans l'état de montage final de la colonne de direction (1) sur le support de colonne de direction (8) dans la région de la première portion de trou (11a) du trou oblong (11), et la portion du côté arrière du véhicule (12b) présentant des moyens de support (20) qui, pour leur part, au moins dans l'état de montage final de la colonne de direction (1), sont disposés sur le support de colonne de direction (8) dans un plan au-dessus de la plaque de guidage (10) du support de colonne de direction (8) et, à la fois dans l'état de prémontage et dans l'état de montage final de la colonne de direction (1), sont disposés sur le support de colonne de direction (8) dans la région de la deuxième portion de trou (11b) du trou oblong (11), lesquels moyens de support sont inclinés latéralement depuis les côtés de l'élément d'engagement positif (12) dans une mesure telle que les moyens de support (20), du fait d'un mouvement relatif entre le support de colonne de direction (8) et l'élément d'engagement positif (12) puissent être transférés le long du trou oblong (11) dans la région de la première portion de trou (11a) du trou oblong (11), et dépassent latéralement le trou oblong.

6. Système selon l'une quelconque des revendications 1 à 5, **caractérisé en ce que** l'élément d'engagement positif (12) est réalisé en une ou plusieurs parties.

7. Système selon la revendication 6, **caractérisé en ce que** lors du choix d'un élément d'engagement positif (12) d'une seule pièce, celui-ci se compose d'une matière plastique, d'un matériau composite ou d'un métal et, lors du choix d'un élément d'engagement positif (12) en plusieurs parties, celui-ci est formé par une partie avant d'élément d'engagement positif reproduisant la portion du côté avant du véhicule (12a) de l'élément d'engagement positif (12) et par une portion arrière de l'élément d'engagement positif reproduisant la portion du côté arrière du véhicule (12b) de l'élément d'engagement positif (12), la partie avant et la partie arrière de l'élément d'engagement positif étant connectées l'une à l'autre par engagement par correspondance de forme, par force et/ou par liaison de matière et se composant d'un matériau identique ou différent.

8. Système selon la revendication 1, **caractérisé en ce que** le composant (7) fixé à la carrosserie est formé par une traverse de véhicule.

9. Véhicule, en particulier véhicule automobile, comprenant un système selon l'une quelconque des revendications 1 à 8.
